# EUROPÄISCHE PATENTSCHRIFT

(11) **EP 0 925 638 B1**
(45) Veröffentlichungstag und Bekanntmachung des Hinweises auf die Patenterteilung: **31.10.2001**
(21) Anmeldenummer: 97918908.1
(22) Anmeldetag: 26.08.1997
(51) Int. Cl.: H02M 3/337

(54) **DC/DC - UMRICHTERSCHALTUNG**
DC/DC CONVERTER CIRCUIT
CIRCUIT CONVERTISSEUR CONTINU-CONTINU

(30) Priorität: 10.09.1996 DE 19636760
(43) Veröffentlichungstag der Anmeldung: 30.06.1999
(73) Patentinhaber: SIEMENS AKTIENGESELLSCHAFT, 80333 München (DE)
(72) Erfinder: BRAKUS, Bogdan, D-82131 Stockdorf (DE); KULZER, Ernst, D-82049 Pullach (DE)
(86) Internationale Anmeldenummer: DE9701856
(87) Internationale Veröffentlichungsnummer: WO9811658

(56) Entgegenhaltungen:
- EP-A- 0 016 537
- EP-A- 0 392 419
- US-A- 4 943 903

## Beschreibung

Bisher wurden in Umrichtern, insbesondere in Gleichspannungs-Gleichspannungs-Umrichtern bevorzugt Schottky-Dioden im Sekundär-Stromkreis eingesetzt. Dies bringt jedoch den Nachteil mit sich, daß mit sinkender Ausgangsspannung sich eine Verschlechterung des Wirkungsgrades bei der genannten Umrichterart ergibt. Der Wirkungsgrad beträgt beispielsweise bei einer Eingangsspannung von 48 V und einer Ausgangsspannung von 5 V weit über 80%, bei einer Ausgangsspannung von 2 V sinkt dieser jedoch unter 70%. Die Ursache dafür liegt im wesentlichen in der hohen Diodenrestspannung der im Ausgangskreis angeordneten Gleichrichter.
Eine Verbesserung des Wirkungsgrades kann durch die Verwendung von synchronen Gleichrichtern erreicht werden. Dabei werden die im Ausgangskreis des Umrichters angeordneten Schottky-Dioden durch niederohmige Power-MOS-Transistoren überbrückt oder ersetzt. Wegen ihres niedrigen Drain-Source Widerstandes R_{DS(on)} von beispielsweise 10 mOhm, entsteht bei einem Ausgangsstrom von 10 A nur noch ein Spannungsabfall von 0,1 V gegenüber 0,4 bis 0,5 V bei der Verwendung von Schottky-Dioden.

Die Verwendung von synchronen Gleichrichtern mit Power-MOS-Transistoren bringt jedoch neben dem Nachteil, daß diese eine Ansteuerschaltungung benötigt wird, den weiteren Nachteil mit sich, daß besonders bei hohen Schaltfrequenzen eine Reihe von schaltungstechnischen Problemen auftreten. Einige davon sind:
- Umladeverluste durch die Gateladung und Gateentladung der für die synchrone Gleichrichtung verwendeten Power-MOS-Transistoren,
- Überlappung von Schaltzeiten, dadurch Rück- und Querströme,
- Schaltverzögerungen verkleinern die effektive leitende Phase der synchronen Gleichrichter und verringern einen maximal möglichen Wirkungsgradgewinn und
- zusätzliche Hilfsspannungsversorgung wird notwendig.

Zum Ansteuern der synchronen Gleichrichter gibt es zwei Schaltungsvarianten. Bei diesen Schaltungsvarianten unterscheidet man zwischen einem selbstgesteuerten Verfahren und einem fremdgesteuerten Verfahren.
Schaltungsanordnungen für das selbststeuernde Verfahren sind aus INTELEC'91 (NOV.1991)IEEE, Practical application of MOSFET synchronous rectifiers, Seite 495 bis 501, James Blanc, Siliconix incorporated bekannt. Selbststeuernde Verfahren weisen jedoch den Nachteil auf, daß der Eingangsspannungsbereich eingeschränkt ist und eine variierende Steuerspannung am Gate des synchronen Gleichrichters anliegt und daß keine optimale Nutzung einer möglichen Verbesserung des Wirkungsgrades erreicht wird.

Schaltungsanordnungen für das fremdgesteuerte Verfahren sind aus IEEE 1995, Seite 99 bis 106, Power Integrated Circuits for Telecom DC/DC Converters, F.Javier Ruiz-Merino bekannt. Die Nachteile, die sich bei einer Schaltungsanordnung mit einem fremdgesteuerten Verfahren ergeben, sind:
- ein hoher Schaltungsaufwand für Steuereinheiten, Treiber und Hilfsversorgung
- eine kritische Schaltzeitpunkt-Erfassung
- ein geringer Wirkungsgradgewinn bei hohen Frequenzen

Aus dem Fachbuch Schaltnetzteile von J. Wüstenhube, expert-Verlag, VDE-Verlag, 1979, S. 38, Bild 1.15 ist ein stromgespeister Gegentaktwandler bekannt.

Aus der US Patentschrift US 4, 943,903 ist eine Schaltungsanordnung mit einem ersten und zweiten Umrichter bekannt.

Aus der europäischen Patentanmeldung 0 016 537 A1 ist ein Umrichter bekannt, der durch einen Regelkreis gesteuert wird, ohne Ausgangströme und Ausgangsspannungen über eine Rückkoppelschleife abzufragen.

Aufgabe der Erfindung ist es, einen kompakt geregelten Gleichspannungs-Gleichspannungs Umrichter so auszugestalten, daß dieser einen hohen Wirkungsgrad, insbesondere bei kleinen Ausgangsspannungen aufweist.

Die Aufgabe wird durch die Merkmale des Patentanspruchs 1 gelöst.

Die Schaltungsanordnung bringt den Vorteil mit sich, daß die Eingangsspannung U_{AO} für den zweiten Umrichter nur geringen Schwankungen unterliegt, d.h. nur wenige Prozent abhängig von den auszuregelnden Längsspannungsabfällen ist. Die sekundären Steuerimpulse für die synchronen Gleichrichter haben dadurch praktisch konstante Amplituden.

Die Schaltungsanordnung bringt den weiteren Vorteil mit sich, daß bedingt durch die sehr kurzen Ausschaltpausen zwischen den Einschaltphasen der Schalttransistoren T2 und T3 der primäre Pulsstrom I_{P} = I_{AO} praktisch ein Gleichstrom ist mit kurzer Lücke bei einem überlagerten Magnetisierungsstrom. Der sekundäre Pulsstrom IS ist ebenfalls im wesentlichen ein Gleichstrom mit kurzer Lücke. Dadurch werden die beiden Kondensatoren C_{O} und C_{A} von diesem Umrichter nur unwesentlich belastet. Ein hoher Wechselstrom in den Kondensatoren der DC/DC-Umrichter erfordert große und teuere Bauelemente; anderenfalls wird die Brauchbarkeitsdauer erheblich reduziert. Ihre Dimensionierung bezüglich zulässiger Spannungswelligkeit entspricht der eines hochfrequenten Umrichters. Bei einer Schaltlücke von beispielsweise 500 ns kann der Kondensator CA unabhängig von der Frequenz so dimensioniert werden, wie bei einem Durchflußumrichter mit Tₑᵢₙ/T = 0,5 und einer Taktfrequenz von 1 MHz. Dies bringt den Vorteil mit sich, daß ein Einsatz von hochwertigen, kapazitätsarmen Keramikkondensatoren trotz niederer Schaltfrequenz möglich wird. Dasselbe gilt für den primären Pulskondensator C0.

Die Schaltungsanordnung bringt den Vorteil mit sich, daß bei einer selbststeuernden Sekundäranordnung ein Steueraufwand zur Zeiterfassung und für die schnellen Treiber entfallen. Die Steuerenergie für die Schalttransistoren pendelt verlustarm zwischen den beiden Gates der Schalttransistoren T4 und T5. Dadurch ist der Wirkungsgrad prinzipiell besser als bei Schaltungen mit zusätzlichen Treibern.

Eine weitere vorteilhafte Ausgestaltung der Erfindung liegt darin, daß diese ohne Steuerelektronik und zugehörige Hilfsversorgung für synchrone Gleichrichter auskommt.

Die Schaltungsanordnung bringt den Vorteil mit sich, daß die Induktivität L2 im Längszweig des Sekundärstromkreises sehr klein sein kann. Sie kann unter Umständen völlig entfallen.

Durch die Schaltungsanordnung ergibt sich als zusätzlicher Vorteil, daß diese in kompakter Flachbauweise herstellbar ist.

Weitere vorteilhafte Ausbildungen der Erfindung sind in den Unteransprüchen angegeben.

Weitere Besonderheiten der Erfindung werden aus der nachfolgenden, näheren Erläuterung eines Ausführungsbeispieles anhand von Zeichnungen ersichtlich.

Es zeigen:
- Figur 1: einen Umrichter,
- Figur 2: eine weitere Ausgestaltung eines Umrichters,
- Figur 3: einen Umrichter mit Spannungsregelung,
- Figur 4: einen Umrichter mit einer weiteren Ausgestaltung einer Spannungsregelung,
- Figur 5: einen Umrichter mit Stromregelung,
- Figur 6: Signalverläufe am Messshunt RM eines Umrichters,
- Figur 7: einen Aufbau eines ersten Steuerkreises,
- Figur 8: eine weitere Ausgestaltung des ersten Steuerkreises und
- Figur 9: einen Aufbau eines zweiten Steuerkreises.

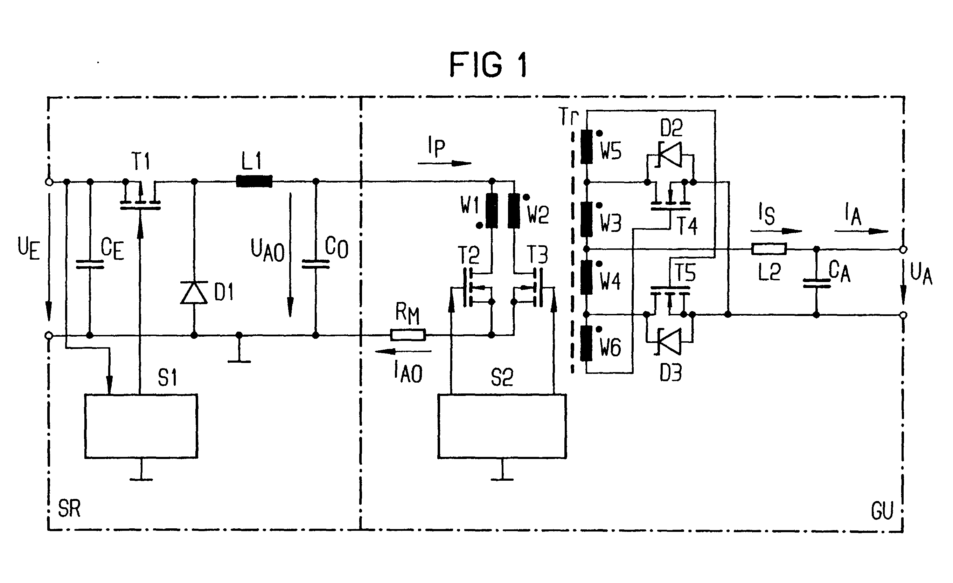

Die in der Figur 1 dargestellte Schaltungsanordnung eines Umrichters zeigt eine Ausgestaltung eines Gleichspannungs-Gleichspannungs DC-DC Umrichters. Mit dieser Schaltungsanordnung lassen sich die eingangs aufgeführten Nachteile vermeiden.
Der Umrichter besteht aus zwei voneinander weitgehend unabhängigen Schaltungsteilen: einer hochfrequent arbeitenden eingangsseitigen ersten Schaltungseinheit SR und einer niederfrequent betriebenen zweiten Schaltungseinheit GU. Ein in der ersten Schaltungseinheit SR angeordneter Schalttransistor T1 wird dabei durch ein hochfrequentes und ein in der zweiten Schaltungseinheit GU angeordneter Gegentaktumrichter mit den Schalttransistoren T2, T3 durch ein niederfrequentes Signal angesteuert.

Die erste Schaltungseinheit SR, ein Schaltregler, ist im wesentlichen aus einem Schalttransistor T1, einer Freilaufdiode D1 sowie einem, aus einer Induktivität L1 und einer Kapazität C₀ gebildeten Sieb zusammengesetzt. Bei einer Eingangsspannung U_{E} von 35 bis 80 V und bei einer zu erreichenden Ausgangsspannung U_{AO} von beispielsweise 30 V beträgt der Wirkungsgrad dieser ersten Schaltungseinheit mehr als 95 %.

Die Vorteile, die sich durch die Zusammensetzung zweier Umrichter ergeben sind, daß die Schaltfrequenz des ersten Umrichters erheblich höher gewählt werden kann als beim Gegentaktumrichter mit synchroner Gleichrichtung. Bei einer Schaltfrequenz, die größer ist als 500 kHz, sind die Siebkomponenten C_{E}, L1 und C₀ sehr klein.

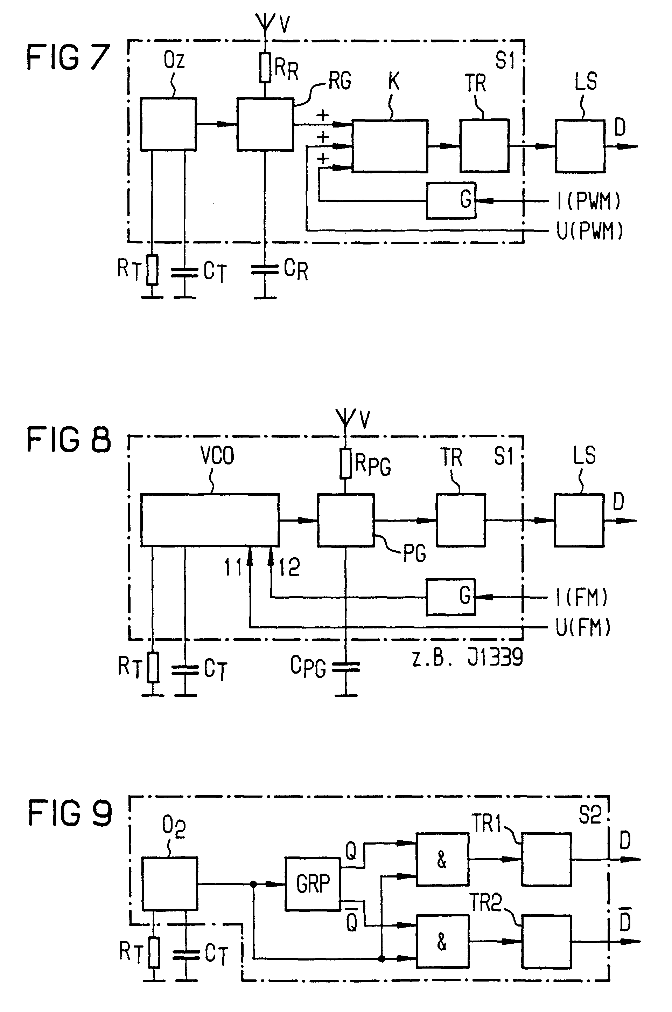

Der in der ersten Schaltungseinheit SR angeordnete erste Steuerkreis S1 steuert den Schalttransitor T1. Der erste Steuerkreis S1 liefert, wie in den Figuren 7, 8 dargestellt, entweder ein pulsbreiten- oder frequenzmoduliertes Ausgangssignal zur Steuerung des Schalttransistors T1.

Der primärseitige Hauptstromkreis verläuft vom Eingang für die Gleichspannung UE über den elektronischen Schalter T1 und einer Drossel L1 an einen primärseitigen Anschluß eines Transformators Tr. Die Drossel L1 bildet einen Teil des Siebs. Der elektronische Schalter T1 wird von einem ersten Steuerkreis S1 angesteuert.

Die an sich bekannte Grundschaltung eines Gegentaktumrichters mit galvanischer Trennung der die zweite Schaltungseinheit GN bildet, besteht im Primärteil aus zwei gleichen, aber gegensinnig gewickelten Wicklungen W1 und W2 des Transformators Tr.

An den primärseitig angeordneten Wicklungen W1 und W2 des Transformators ist jeweils ein Schaltungstransistor T2 und T3 mit seinem Drainanschluß angeschlossen. Diese Schalttransistoren T2 und T3 werden von einem zweiten Steuerkreis S2 mit einer konstanten Frequenz im Gegentakt angesteuert.

Die Schaltpause der primärseitig angeordneten Schalttransistoren T2 und T3 zur Vermeidung von Überlappungen von Schaltphasen, in denen beide Schalttransistoren leitend sind, ist so kurz wie möglich gehalten. Die konstante Schaltfrequenz für die beiden Schalttransistoren wird so niedrig wie möglich gewählt und mit einer Gesamtdimensionierung des Transformators Tr abgestimmt. Die Schaltfrequenz für die Schalttransistoren T2 und T3 sollte vorzugsweise im Frequenzband zwischen 20 kHz und 100kHz liegen, über 20 kHz wegen entstehender Geräusche und unter 100 kHz wegen eines zu erzielenden, guten Wirkungsgrades. Der Steuerkreis S2 ist in Figur 9 dargestellt.

Die Sekundärseite des Transformators Tr bilden zwei gleich ausgebildete Wicklungen W3 und W4. Diese Wicklungen sind in Serie geschaltet und weisen einen ersten und zweiten Anschluß auf.

Mit dem ersten Anschluß ist ein vierter Schalttransistor T4 und mit dem zweiten Anschluß ist ein fünfter Schalttransistor T5 jeweils mit seinem Drainanschluß verbunden.
Am ersten Anschluß ist zusätzlich eine erste Hilfswicklung W5 und am zweiten Anschluß ist eine zweite Hilfswicklung W6 angeschlossen.
Der verbleibende Anschluß der weiteren Wicklung W5 ist mit dem Gate des fünften Schalttransistors T5 und der verbleibende Anschluß der zweiten Wicklung W6 mit dem Gate des vierten Schalttransistors T4 verbunden.

Der sekundärseitige Hauptstromzweig der Schaltungseinheit GU verläuft von einer, die erste und zweite sekundärseitige Wicklung des Übertragers verbindenden Verbindungssleitung über eine Induktivität L2 zum Schaltungsausgang.
An den Wicklungen W3, W4 liegt gegenphasig die, zu der an der Primärseite des Transformators Tr transformierten Rechteckspannung.
Diese transformierte Rechteckspannung wird durch die synchron im Gegentakt angesteuerten Schalttransistoren T4 und T5 gleichgerichtet. Die Schalttransistoren T4, T5 werden über die Hilfswicklungen W5, W6, welche zur Aufstockung der Steuerspannung dienen, angesteuert. Der jeweils leitend gesteuerte Schalttransistor T4, T5 erhält am Gate die Summenspannung aus drei Wicklungen (W4, W3, W5; bzw. W3, W4, W6). Während der Sperrphase liegt am Gate von T5 nur die einfache negative Spannung - U(W5) an. Dasselbe gilt sinngemäß für den vierten Schalttransistor T4.

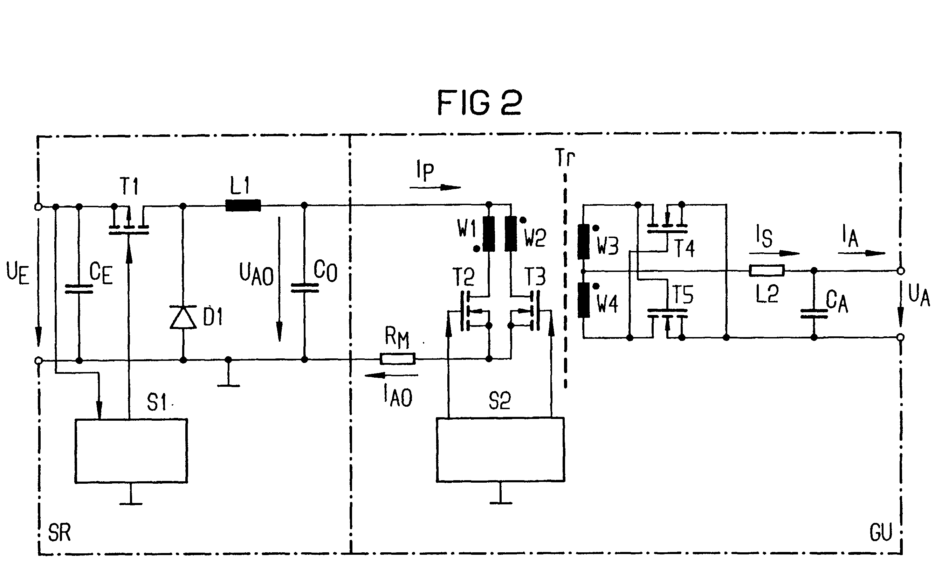

In Figur 1 sind die beiden synchron schaltenden Schalttranssistoren T4 und T5 durch Schottky-Dioden D2 und D3 überbrückt. Mit diesen Dioden wird verhindert, daß die Body-Dioden der Schalttransistoren T4 und T5 bei Schaltvorgängen leitend werden, da die Schottky-Dioden eine geringere Flußspannung aufweisen als die Body-Dioden verhindern sie im allgemeinen auch ein schnelles Ausschalten der Schalttransistoren. Der Verzicht auf die Schottky-Dioden führt zu einer Reduzierung des Wirkungsgradgewinns.
Prinzipiell sind die Schotty-Dioden aber nicht notwendig und können, wie in Figur 2 gezeigt, gerade bei niedrigen Frequenzen, weggelassen werden.

Ein wie in Fig. 1 dargestellter Umrichter verbindet in vorteilhafter Weise eine möglichst niederfrequente, synchrone Gleichrichtung mit einer galvanischen Trennung bei einem Minimum an Aufwand für Steuerung und Siebmittel. Ein derartiger Umrichter zeichnet sich außerdem durch hohe Robustheit aus.

In einer weiteren Schaltungsausgestaltung, wie in Figur 2 dargestellt, können die Hilfswicklungen W5, W6 bei hinreichend hoher transformierter Spannung entfallen. Am Gateanschluß des vierten Schalttransistors T4 liegt dann der zweite Anschluß der wicklungen W3, W4, der Gateanschluß des fünften Transsistors T5 liegt dann am ersten Anschluß des Transformators Tr.

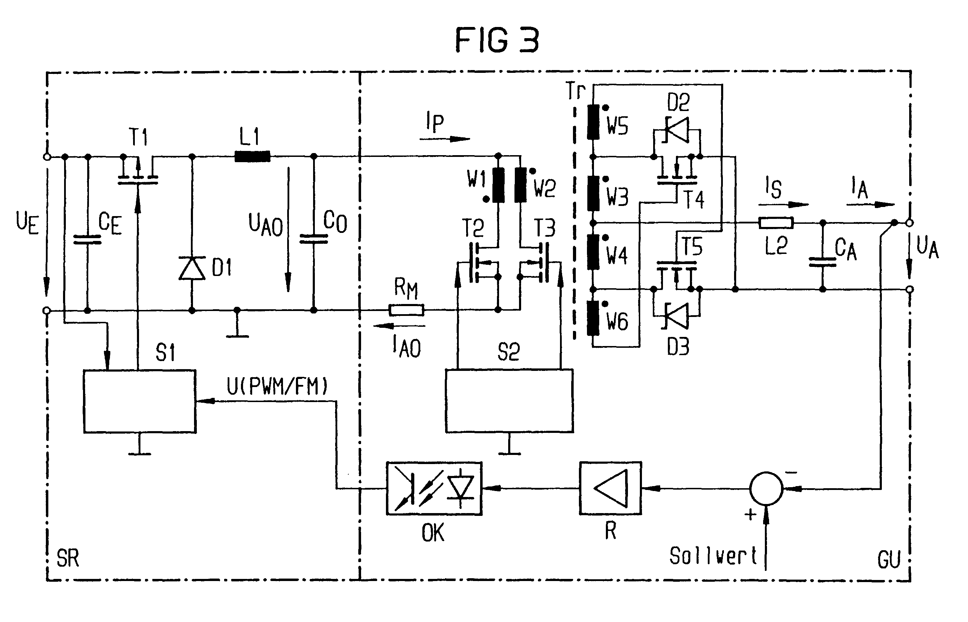

Eine Spannungsregelung des Umrichters kann, wie in Figur 3 dargestellt, direkt vom Ausgang UA des Umrichters aus erfolgen. Der Regler R verstärkt eine Regelabweichung und steuert galvanisch getrennt über einen Optokoppler OK einen im ersten Steuerkreis S1 angeordneten Pulsbreitenmodulator PWM oder Frequenzmodulator FM. Dieser Steuerkreis S1 ist in Figur 7 und Figur 8 abgebildet. Der Pulsweiten- oder Frequenzmodulator PWM/FM steuert über einen Treiber in geeigneter Weise z.B. über ein RC-Netzwerk, Übertrager, Optokoppler den Schalttransistor T1 des Schaltreglers SR. Der Steuerhub macht sich am Zwischenkreis-Speicherkondensator C₀ (U_{AO}) geringfügig bemerkbar. Der Gegentaktwandler ist nicht als steuerndes Glied in die Spannungsreglung mit einbezogen. Sein Tastgrad T_{EIN}/T von 1:1 (kurze Schaltlücke) bleibt unberührt vom Regelvorgang. Die Spannungsschwankungen von U_{AO} über den Lastbereich entsprechen etwa dem Längsspannungsabfall der Gegentaktstufe (ca. 10 %). Frequenzgangbestimmend für die Regelung ist die Induktivität L1 mit den beiden Kondensatoren C_{O} und C_{A}. Die Induktivität L2 beeinflußt das Frequenzverhalten im kritischen Frequenzbereich kaum.

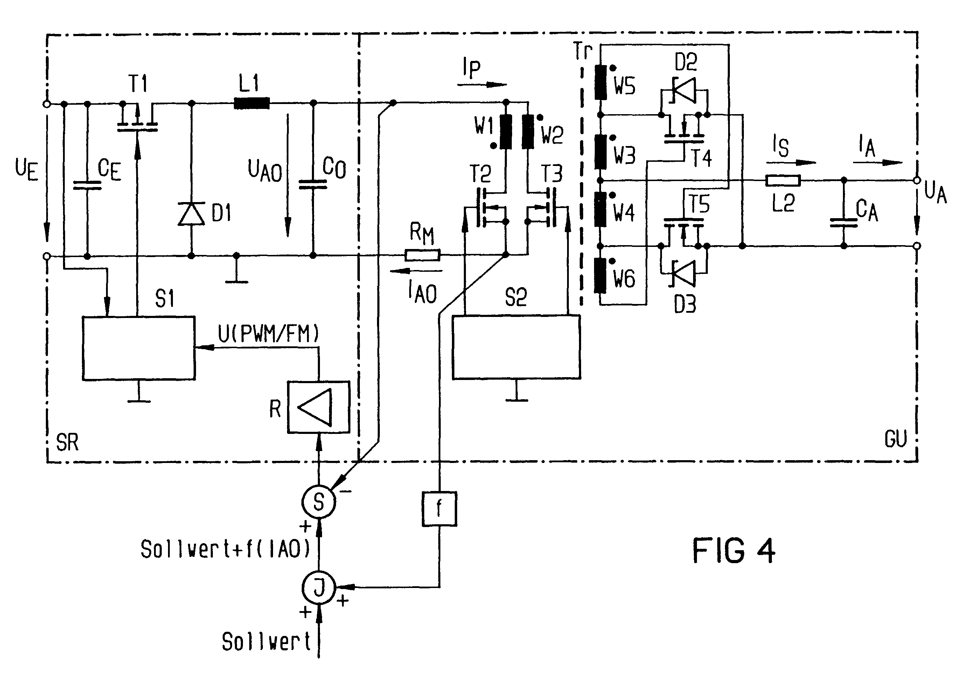

Eine weitere Variante des Regelkreises zur Spannungsregelung - im Gegensatz zur zuvor erläuterten Variante - auf der Primärseite des Gegentaktwandlers angeordnet und in Figur 4 dargestellt. Die Regelqualität und Dynamik bleiben bei dieser Schaltungsvariante weitestgehend erhalten, da sich die transéformierte Zwischenkreisspannung U_{AO"} (C_{A} U_{AO} ^{·} N_{W1}/N_{W3})) und die Ausgangsspannung U_{A} nur in den ohmschen Spannungsabfällen des Gegentaktumrichters unterscheiden. Die Spannungsabfälle sind nur vom Laststrom und geringfügig von der Temperatur abhängig. Die Lastabhängigkeit kann aber durch die Erfassung des Stromsignals an R_{M} (entspricht praktisch dem übersetzten Ausgangsstrom) und nach geeigneter Weiterverarbeitung (f) durch Überlagerung (Überführung) (wie z.B. zum Sollwert der Spannungsregelung) ausgeglichen werden (siehe Figur 4). Der Vorteil der in Figur 4 abgebildeten Variante des Umrichters ist die Einsparung eines Optokopplers OK und des sekundärseitigen Regelverstärkers sowie dessen Hilfsspannungsversorgung.

Der primärseitig benötigte Regelverstärker R ist beispielsweise in die Steuerbausteinen UCC1806, TDA4919, J1339 mit integriert.

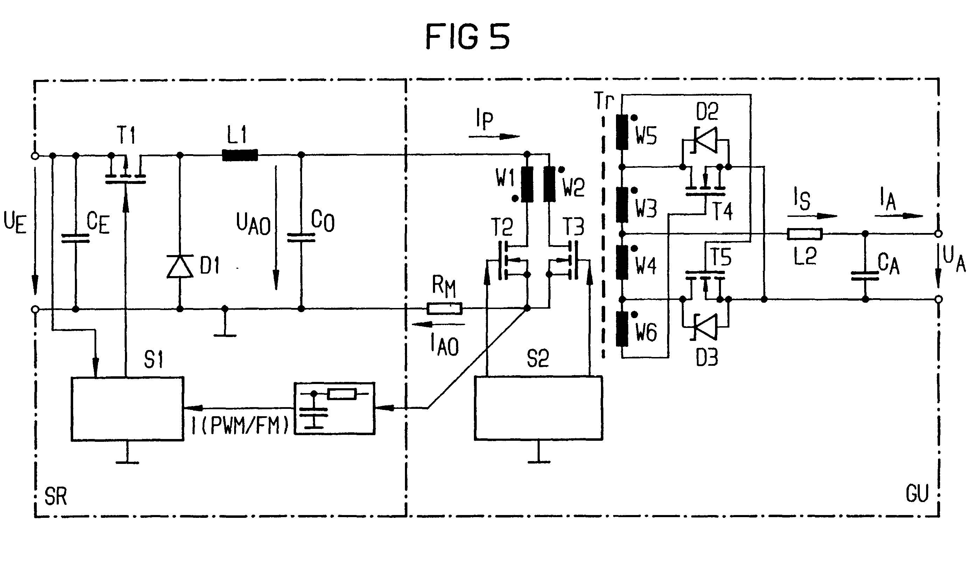

Die Strombegrenzung/Stromregelung erfolgt gänzlich auf der Primärseite des Gegentaktumrichters. Der am Meßwiderstand R_{M} anliegende Meßwert entspricht dem übersetzten Ausgangsstrom I_{A}. Lediglich die in den Schaltpausen entstehenden kleinen Stromlücken und eventuell der vom Magnetisierungsstrom stammende Anteil muß gesiebt werden (siehe Figur 5).

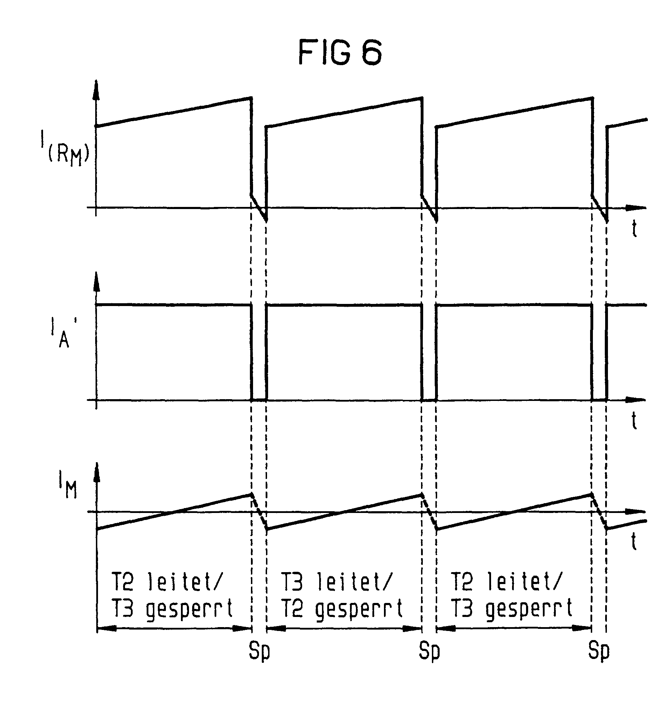

In Figur 6 ist der Verlauf des Stroms IRM und dessen Teilströme IA' (transformierter Ausgangsstrom IM (Magnetisierungsstrom)) entlang der Zeitachsen aufgetragen.

Die hochwertige Strombegrenzung hat keine auslaufende Kennlinie.
Auf eine aufwendige Spitzenwertgleichrichtung des niederpegeligen Signals kann bei dieser Schaltungsausgestaltung verzichtet werden.
Dieser Vorteil tritt nur bei einer Gegentaktschaltung mit maximalem und unveränderlichem Tastgrad auf. Im Überlastfall wird über die Tastgradreduzierung des Schaltreglers SR die Zwischenkreisspannung U_{AO} gesenkt. Bei Klemmenkurzschluß am Ausgang des Schaltreglers SR wird U_{AO} auf sehr kleine Werte reduziert (praktisch Längsspannungsabfall des Gegentaktumrichters). Wobei I_{AO} als Regelgröße voll erhalten bleibt.

In Figur 7 und 8 sind Ausgestaltungen des ersten Steuerkreises S1 abgebildet.
Der Widerstand RT und der Kondensator CT bilden die frequenzbestimmenden Glieder für den eine konstante Frequenz erzeugenden Oszillator. Der Widerstand RR und der Kondensator CR sind Beschaltungsglieder für einen vom Oszillator angesteuerten Rampengenerator. Der Rampengenerator RG erzeugt eine Rampenspannung, die durch den Oszillator getriggert wird. Die Steilheit der Rampenspannung ist proportional der am Steuerschaltungseingang anliegenden Spannung V. Das von dem Rampengenerator RG erzeugte Ausgangssignal wird einen Komparator K zugeführt. Die am Komparatoreingang anliegende Spannung wird mit den weiteren am ersten und zweiten Spannungseingang des Komparators verglichen.

Die erste Spannung ist die Ausgangsspannung des Spannungsreglers und die zweite Spannung ist das Ausgangssignal eines Grenzwertvergleichers zwischen dem Stromsignal und der Kennlinie zur Strombegrenzung. Das Ausgangssignal des Komparators K wird über einen Treiber TR einem Level-Shift-Einheit zugeleitet, wobei die auf die Eingangsspannung UE bezogenen Steuerimpulse des Treibers TR auf das Spannungsniveau des im Hauptstromzweig auf der Primärseite des Umrichters angeordneten Schalttransistors T1 angehoben werden.

Figur 8 zeigt eine Ausgestaltung des ersten Steuerkreises S1 bei einem Betrieb mit Frequenzmodulation.
Die vom VCO erzeugten Steuerimpulse triggern den Pulsgenerator PG und erzeugen Impulse, deren Breite umgekehrt proportional der an V anliegenden Spannung sind.
Durch die passiven Bauteile RT und CT wird eine obere Grenzfrequenz für den Vco festgelegt. Die Frequenz des VCO kann sowohl durch die Ausgangsspannung des Spannungsreglers U(FM) wie auch durch das Ausgangssignal eines Grenzwertvergleichers zwischen dem Stromsignal und der Kennlinie der Strombegrenzung reduziert werden. Über den Treiber TR und die Level-Shift-Einheit wird die auf die Eingangsspannung UE bezogenen Steuerimpulse des Treibers auf das Spannungsniveau des im Plus-Zweig liegenden Transistors T1 angepaßt.

In Figur 9 ist ein Aufbau des zweiten Steuerkreises S2 abgebildet. Die passiven Bauteile RT und CT bilden die frequenzbestimmenden Glieder für den Oszillator. Der Oszillator erzeugt dabei Steuerimpulse mit kurzer Totzeit. Ein Gegentakt Flip-Flop teilt die Steuerimpulse auf zwei Treiberzweigen auf. Die dem Gegentakt FF jeweils nachgeschalteten UND-Gater verhindern das Einschalten beider Treiber in den Schaltpausen Sp (siehe Fig. 6).

## Patentansprüche

1. Schaltungsanordnung zur geregelten Gleichspannungserzeugung, mit einem ersten und einem zweitem Umrichter (SR, GU), wobei der zweite Umrichter (GU) nicht galvanisch getrennt in Kettenschaltung zum ersten Umrichter (SR) angeordnet ist und der erste Umrichter (SR) als Schaltregler mit einem ersten Schalttransistor (T1) und der zweite Umrichter (GU) mit einem Transformators, aufweisenden als Gegentaktumrichter mit galvanischer Trennung mit einem zweiten und dritten Schalttransistor (T2, T3) realisiert ist, wobei der zweite Umrichter (GU) zwei gleichartig im Gegentakt anzusteuernde primärseitig angeordnete Windungen (W1, W2) aufweist,
daß am Ausgang des ersten Umrichters (SR) ein Kondensator (CO) angeordnet ist,
daß der Steuereingang des ersten Schalttransistors (T1) mit einer ersten Steuerschaltung (S1) verbunden ist, wobei dieser ein hochfrequentes Steuersignal abgibt, und
daß zwischen Eingang des zweiten Umrichters (GU) und dem Eingang der ersten Steuerschaltung (S1) Regelelemente (S,I) zu Steuerung des ersten Umrichters angeordnet sind,
**dadurch gekennzeichnet,**
**daß** die Schalttransistoren (T2, T3) des zweiten Umrichters (GU) mit einer ein niederfrequentes, vom ersten Steuerkreis (S1) unabhängiges Steuersignal abgebenden zweiten Steuerschaltung (S2)
verbunden sind, und
**daß** auf der Sekundärseite des Transformators (Tr) des zweiten Umrichters (GU) mindestens zwei Wicklungen (W3, W4) in Serie angeordnet sind, wobei deren gegenphasig transformierten Spannungen durch die an die Wicklungen angeschlossenen und sychron im Gegentakt angesteuerten vierten und fünften Schalttransistoren (T4, T5) gleichgerichtet werden.

2. Schaltungsanordnung nach Anspruch 1,
**dadurch gekennzeichnet,**
**daß** die erste Steuerschaltung (S1) ein pulsweiten- oder frequenzmoduliertes Signal erzeugt, welches zur Konstanthaltung der Ausgangsspannung UA verwendet wird.

3. Schaltungsanordnung nach Anspruch 1,
**dadurch gekennzeichnet,**
**daß** die zweite Steuereinheit (S2) zwei in Gegentakt arbeitende Steuersignale unveränderlicher, maximaler Pulsbreite zur Ansteuerung der Schalttransistoren (T2, T3) des zweiten Umrichters erzeugt.

4. Schaltungsanordnung nach Anspruch 1,
**dadurch gekennzeichnet,**
**daß** der erste Umrichter (SR) mit einer Eingangskapazität (CE), einen im Längszweig angeordneten ersten Schalttransistor (T1), einer Induktivität (L1) und einer Freilaufdiode (D1) gebildet ist.

5. Schaltungsanordnung nach einem der vorhergehenden Ansprüche,
**dadurch gekennzeichnet,**
**daß** die sekundärseitigen in Reihe geschalteten Wicklungen (W3, W4) des Transformators (Tr) des zweiten Umrichters (GU) einen ersten und zweiten Anschluß aufweisen, **daß** mit dem ersten Anschluß der vierte Schalttransistor (T4) und mit dem zweiten Anschluß der fünfte Schalttransistor (T5) jeweils mit seinem Drainanschluß verbunden ist,
**daß** das Gate des vierten Schalttransistors (T4) mit dem zweiten Anschluß der sekundärseitigen Wicklung des Transformators (Tr) und das das Gate des fünften Schalttransistors (T5) mit dem ersten Anschluß des Transformators der Sekundärseite des Transformators (Tr) verbunden ist,
**daß** der sekundärseitige Hauptstromzweig beginnend zwischen einer Abzweigung zwischen den gleich ausgebildeten sekundärseitig angeordneten Wicklungen (W3, W4) über eine Induktivität (L2) zum Schaltungsausgang führt,
**daß** parallel zum Schaltungsausgang eine Kapazität (C_{A}) angeordnet ist.

6. Schaltungsanordnung nach einem der vorhergehenden Ansprüche,
**dadurch gekennzeichnet,**
**daß** parallel zum Source- und Drainanschluß des vierten und fünften Schalttransistors eine Schottky-Diode (D2, D3) derart angeordnet ist, daß ihre Kathoden jeweils mit dem Drainanschluß des jeweiligen Schalttransistors verbunden sind.

7. Schaltungsanordnung nach einem der vorhergehenden Ansprüche,
**dadurch gekennzeichnet,**
**daß** am ersten Anschluß eine Wicklung (W5) und am zweiten Anschluß eine weitere Wicklung (W6) angeordnet ist, wobei der freie Anschluß der Wicklung (W5) mit dem Gate des fünften Schalttransistors (T5) verbunden ist und der freie Anschluß der weiteren Wicklung (W6) mit dem Gate des vierten Schalttransistors (T4) verbunden ist.

8. Schaltungsanordnung nach einem der vorhergehenden Ansprüche,
**dadurch gekennzeichnet,**
**daß** der erste Steuerkreis (S1) entweder direkt über eine Regelstrecke von der Ausgangsspannung des zweiten Umrichters oder von der Eingangsspannung/dem Eingangsstrom des zweiten Umrichters angesteuert wird.

9. Schaltungsanordnung nach einem der vorhergehenden Ansprüche,
**dadurch gekennzeichnet,**
**daß** der erste Umrichter (SR) ein Hochsetzsteller, ein Single Ended Primary Inductor SEPIC-Konverter oder Cuk-Konverter ist.

## Claims

1. Circuit arrangement for regulated DC voltage generation, with a first and a second converter (SR, GU), the second converter (GU) being arranged in a manner not directly electrically isolated in a concatenated circuit with respect to the first converter (SR) and the first converter (SR) being realized as a switching regulator with a first switching transistor (T1) and the second converter (GU) being realized with a transformer as a push-pull converter with direct electrical isolation with a second and third switching transistor (T2, T3), the second converter (GU) having two turns (W1, W2) which are arranged on the primary side and are to be driven identically in a push-pull manner,
a capacitor (CO) being arranged at the output of the first converter (SR),
the control input of the first switching transistor (T1) being connected to a first control circuit (S1), this outputting a high-frequency control signal, and
regulating elements (S, I) for controlling the first converter being arranged between the input of the second converter (GU) and the input of the first control circuit (S1),
**characterized**
**in that** the switching transistors (T2, T3) of the second converter (GU) are connected to a second control circuit (S2), which outputs a low-frequency control signal independent of the first control circuit (S1), and
**in that** at least two windings (W3, W4) are arranged in series on the secondary side of the transformer (Tr) of the second converter (GU), the voltages of the said windings, which voltages are transformed in antiphase, being rectified by the fourth and fifth switching transistors (T4, T5), which are connected to the windings and are driven synchronously in a push-pull manner.

2. Circuit arrangement according to Claim 1,
**characterized**
**in that** the first control circuit (S1) generates a pulse-width- or frequency-modulated signal which is used for stabilization of the output voltage U_{A}.

3. Circuit arrangement according to Claim 1,
**characterized**
**in that** the second control unit (S2) generates two control signals which operate in a push-pull manner and have an invariable, maximum pulse width for driving the switching transistors (T2, T3) of the second converter.

4. Circuit arrangement according to Claim 1,
**characterized**
**in that** the first converter (SR) is formed with an input capacitance (CE), a first switching transistor (T1) arranged in the series, and an inductance (L1) and a freewheeling diode (D1).

5. Circuit arrangement according to one of the preceding claims,
**characterized**
**in that** the secondary-side, series-connected windings (W3, W4) of the transformer (Tr) of the second converter (GU) have a first and a second terminal, in that the fourth switching transistor (T4) is connected by its drain terminal to the first terminal and the fifth switching transistor (T5) is connected by its drain terminal to the second terminal,
**in that** the gate of the fourth switching transistor (T4) is connected to the second terminal of the secondary-side winding of the transformer (Tr) and that the gate of the fifth switching transistor (T5) is connected to the first terminal of the transformer of the secondary side of the transformer (Tr),
**in that** the main current path on the secondary side, beginning between a branch-off between the identically formed windings (W3, W4), arranged on the secondary side, leads via an inductance (L2) to the circuit output,
**in that** a capacitance (C_{A}) is arranged in parallel with the circuit output.

6. Circuit arrangement according to one of the preceding claims,
**characterized**
**in that** a Schottky diode (D2, D3) is arranged in parallel with the source and drain terminals of the fourth and fifth switching transistors in such a way that the cathodes of the said diodes are in each case connected to the drain terminal of the respective switching transistor.

7. Circuit arrangement according to one of the preceding claims,
**characterized**
**in that** a winding (W5) is arranged at the first terminal and a further winding (W6) is arranged at the second terminal, the free connection of the winding (W5) being connected to the gate of the fifth switching transistor (T5) and the free connection of the further winding (W6) being connected to the gate of the fourth switching transistor (T4).

8. Circuit arrangement according to one of the preceding claims,
**characterized**
**in that** the first control circuit (S1) is driven either directly via a regulated system by the output voltage of the second converter or by the input voltage/the input current of the second converter.

9. Circuit arrangement according to one of the preceding claims,
**characterized**
**in that** the first converter (SR) is a step-up converter, a single-ended primary inductor SEPIC converter or Cuk converter.

## Revendications

1. Circuit pour la production régulée de tension continue, comportant un premier et un deuxième convertisseur (SR, GU) et dans lequel le deuxième convertisseur (GU) est monté, sans être séparé galvaniquement, en un circuit série avec le premier convertisseur (SR), et le premier convertisseur (SR) est réalisé en régulateur de commutation avec un premier transistor de commutation (T1), et le deuxième convertisseur (GU) est réalisé avec un transformateur en convertisseur symétrique à séparation galvanique ayant un deuxième et un troisième transistor de commutation (T2, T3),
le deuxième convertisseur (GU) comporte deux enroulements (W1, W2) côté primaire à commander de la même manière en symétrie,
un condensateur (CO) est monté à la sortie du premier convertisseur (SR),
l'entrée de commande du premier transistor de commutation (T1) est reliée à un premier circuit de commande (S1), celui-ci délivrant un signal de commande haute fréquence,
et
des éléments de régulation (S, I) pour commander le premier convertisseur sont montés entre l'entrée du deuxième convertisseur (GU) et l'entrée du premier circuit de commande (S1),
**caractérisé par le fait que**
les transistors de commutation (T2, T3) du deuxième convertisseur (GU) sont reliés à un deuxième circuit de commande (S2) délivrant un signal de commande à basse fréquence indépendant du premier circuit de commande (S1),
et au moins deux enroulements (W3, W4) sont montés en série du côté secondaire du transformateur (Tr) du deuxième convertisseur (GU), leurs tensions transformées en opposition de phase étant redressées par des quatrième et cinquième transistors de commutation (T4, T5) raccordés aux enroulements et commandés de manière synchrone en opposition de phase.

2. Circuit selon la revendication 1,
**caractérisé par le fait que** le premier circuit de commande (S1) produit un signal qui est modulé en largeur d'impulsion ou en fréquence et qui est utilisé pour maintenir constante la tension de sortie U_{A}.

3. Circuit selon la revendication 1,
**caractérisé par le fait que** le deuxième circuit de commande (S2) produit deux signaux de commande en opposition de phase et ayant une largeur d'impulsion maximale invariable pour commander les transistors de commutation (T2, T3) du deuxième convertisseur.

4. Circuit selon la revendication 1,
**caractérisé par le fait que** le premier convertisseur (SR) est formé par une capacité d'entrée (CE), un premier transistor de commutation (T1) monté dans la branche longitudinale, une inductance (L1) et une diode de roue libre (D1).

5. Circuit selon l'une des revendications précédentes,
**caractérisé par le fait que**
les enroulements (W3, W4), branchés en série côté secondaire, du transformateur (Tr) du deuxième convertisseur (GU) comportent une première et une deuxième borne, il est relié à la première borne le quatrième transistor de commutation (T4) par sa borne de drain et à la deuxième borne le cinquième transistor de commutation (T5) par sa borne de drain,
la grille du quatrième transistor de commutation (T4) est reliée à la deuxième borne de l'enroulement secondaire du transformateur (Tr) et la grille du cinquième transistor de commutation (T5) est reliée à la première borne du transformateur du côté secondaire du transformateur (Tr),
la branche de courant principale côté secondaire mène, en commençant entre une dérivation située entre les enroulements (W3, W4) conçus à l'identique et montés côté secondaire, par l'intermédiaire d'une inductance (L2), à la sortie de circuit
et une capacité (C_{A}) est montée en parallèle à la sortie de circuit.

6. Circuit selon l'une des revendications précédentes,
**caractérisé par le fait qu'**une diode de Schottky (D2, D3) est monté en parallèle à la borne de source et de drain du quatrième et du cinquième transistor de commutation de telle sorte que ses cathodes sont reliées à chaque fois à la borne de drain du transistor de commutation respective.

7. Circuit selon l'une des revendications précédentes,
**caractérisé par le fait qu'**un enroulement (W5) est monté sur la première borne et un autre enroulement (W6) sur la deuxième borne, la borne libre de l'enroulement (W5) étant reliée à la grille du cinquième transistor de commutation (T5) et la borne libre de l'autre enroulement (W6) étant reliée à la grille du quatrième transistor de commutation (T4).

8. Circuit selon l'une des revendications précédentes,
**caractérisé par le fait que** le premier circuit de commande (S1) est commandé soit directement par l'intermédiaire d'un système de régulation par la tension de sortie du deuxième convertisseur soit par la tension d'entrée ou le courant d'entrée du deuxième convertisseur.

9. Circuit selon l'une des revendications précédentes,
**caractérisé par le fait que** le premier convertisseur (SR) est un élévateur de tension, un Single Ended Primary Inductor SEPIC-Converter ou un Cuk-Converter.
